Europäisches Patentamt

European Patent Office

Office européen des brevets

(19)

(11) EP 0 853 271 A1

## (12) EUROPEAN PATENT APPLICATION

(43) Date of publication:
15.07.1998 Bulletin 1998/29

(51) Int Cl.6: G06F 3/033, G06F 3/023

(21) Application number: 98300244.5

(22) Date of filing: 14.01.1998

(84) Designated Contracting States:
AT BE CH DE DK ES FI FR GB GR IE IT LI LU MC
NL PT SE
Designated Extension States:
AL LT LV MK RO SI

(30) Priority: 14.01.1997 JP 4920/97

(71) Applicant: Seiko Instruments Information
Devices Inc.
Chiba-shi, Chiba (JP)

(72) Inventors:
• Suzuki, Kazumichi
  Mihama-ku, Chiba-shi, Chiba (JP)
• Morita, Yoshiyuki
  Mihama-ku, Chiba-shi, Chiba (JP)

(74) Representative: Sturt, Clifford Mark et al
J. MILLER & CO.
9 John Street
London WC1N 4JH (GB)

(54) **Method of starting function of an information processing unit and co-ordinate reading system**

(57) The invention provides a co-ordinate reading system that is capable of starting function of an information processing unit by operating the co-ordinate reading apparatus without employing other unit. A menu 13 is provided in a co-ordinate reading apparatus 10. Upon reading the menu 13 by a co-ordinate indicator 12, its co-ordinate value and a switch status are outputted to a tablet driver 30. A method analysing section 32 compares the co-ordinate value and the status which are inputted through an input section 31 with menu data stored in a menu data storage section 33 to analyse the menu, and function data which is associated with the analysed menu is outputted through a start data output section 34. An operating system 40 allows the function indicated on the basis of the start data.

FIG. 1

EP 0 853 271 A1

## Description

The present invention relates to a coordinate reading system in which a coordinate reading apparatus is connected to an information processing unit such as a computer, and a predetermined function is executed in the information processing unit. In particular, the present invention relates to a method of controlling the execution of a function of the information processing unit on the basis of information transmitted from the coordinate reading apparatus to the information processing unit, and an interface unit, a tablet driver and the coordinate reading system which execute that method.

The coordinate reading apparatus is constructed of an coordinate indicator and a tablet, and is directed to an input unit having a function of outputting a coordinate value of an indicated point and a switch status of a switch provided in the coordinate indicator when the coordinate indicator indicates a point on the tablet.

A system is structured in such manner that the above coordinate reading apparatus is connected to the computer so that application program having a specific function is executed while the coordinate value and the switch status are being inputted. This system is called "coordinate reading system" in this specification. In recent years, in such a coordinate reading system, it becomes general to standardize a specification of connecting the coordinate reading apparatus and the application program to provide as a tablet driver (more generally called "software driver") . A format of the coordinate value and the switch status outputted from the coordinate reading apparatus is varied according to the respective devices. The tablet driver is designed to have a function of converting the format of the coordinate value and the switch status into a common format required by the application program, and outputting the converted format.

Further, the tablet driver is also provided with a new function for the purpose of improving the convenience of the application program in addition to the above basic format converting function.

For example, there is a tablet driver having a input function called "menu". The input method using the menu, which has been already realized since a long time ago, provides a function of defining square regions on the tablet and indicating the region to convert a read coordinate value into another information defined in the indicated region. For example, menus to which characters are assigned are defined on the tablet as in a key board, and the respective character regions are indicated, thereby being capable of outputting character information instead of the coordinate value. If this function is provided in the tablet driver and outputted to the application program instead of key board information, both of graphic information and character information can be inputted by only the coordinate reading apparatus, thereby being capable of more readily using the application program.

However, in the function of the conventional tablet driver, although there is a system that provides the ease to use the application program under the circumstance where application program is being executed, there has been no system that allows the application program per se to be started by only the operation of the coordinate reading apparatus. For that reason, in the conventional coordinate reading system, a command for starting the application program is inputted from the key board, or an icon on a display is inputted by a mouse for starting the application program. Thus, the operating environment could not be adjusted by only the coordinate reading apparatus.

The present invention has been made to improve the operating environment of the conventional coordinate reading system as described above, and an object of the present invention is as follows.

That is, an object of the present invention is to realize a method of starting the function of an information processing unit which is capable of starting a variety of functions within the information processing unit, in particular, application program by only the operation of the coordinate reading apparatus. Another object of the present invention is to realize an interface unit of a coordinate reading system, a tablet driver of the coordinate reading system and the coordinate reading system to which the above method is applied.

In order to solve the above problems, according to a first aspect of the present invention, there is provided a method of starting the function of an information processing unit in a coordinate reading system in which a coordinate reading apparatus constructed of a coordinate indicator and a tablet is connected to the information processing unit, and a predetermined function is executed in the information processing unit on the basis of information transmitted from the coordinate reading apparatus to the information processing unit, wherein a coordinate value within a predetermined area of the tablet is discriminated, and the predetermined function is started when the coordinate value within the predetermined area is discriminated.

Also, according to a second aspect of the present invention, there is provided a method of starting the function of an information processing unit in a coordinate reading system in which a coordinate reading apparatus constructed of a coordinate indicator having a switch and a tablet is connected to the information processing unit, and a predetermined function is executed in the information processing unit on the basis of information transmitted from the coordinate reading apparatus to the information processing unit, wherein it is discriminated that the status of the switch becomes a predetermined status, and the predetermined function is started when the predetermined status is discriminated.

Further, according to a third aspect of the present invention, there is provided a method of starting the function of an information processing unit in a coordinate reading system in which a coordinate reading apparatus constructed of a coordinate indicator having a plurality of switches and a tablet is connected to the information processing unit, and a predetermined function is executed in the information processing unit on the basis of information transmitted from the coordinate reading apparatus to the information processing unit, wherein it is discriminated that the status of the plurality of switches becomes a predetermined status, and the predetermined function is started every predetermined status when the predetermined status is discriminated.

Still further, according to a fourth aspect of the present invention, there is provided a method of starting the function of an information processing unit in a coordinate reading system in which a coordinate reading apparatus constructed of a coordinate indicator having a switch and a tablet is connected to the information processing unit, and a predetermined function is executed in the information processing unit on the basis of information transmitted from the coordinate reading apparatus to the information processing unit, wherein a coordinate value within a predetermined area of the tablet is discriminated, and it is discriminated that the status of the switch becomes a predetermined status, and the predetermined function is started when the coordinate value within the predetermined area and the predetermined status are discriminated.

Yet still further, according to a fifth aspect of the present invention, there is provided a method of starting the function of an information processing unit in a coordinate reading system in which a coordinate reading apparatus constructed of a coordinate indicator having a plurality of switches and a tablet is connected to the information processing unit, and a predetermined function is executed in the information processing unit on the basis of information transmitted from the coordinate reading apparatus to the information processing unit, wherein a coordinate value within a predetermined area of the tablet is discriminated, and it is discriminated that the status of the plurality of switches become a predetermined status, and the predetermined function is started when the coordinate value within the predetermined area and the predetermined status are discriminated.

Yet still further, according to sixth to tenth aspects of the present invention, there is provided a method of starting the function of an information processing unit according to said first to fifth aspects, wherein application program is installed in the information processing unit, and the application program is started as the starting function.

Yet still further, according to eleventh to thirteenth aspects and fourteenth to sixteenth aspects of the present invention, there is provided a method of starting the function of an information processing unit, in addition to said first to fifth aspects and said sixth to tenth aspects, respectively, wherein a predetermined reading area is set, a predetermined status is set, and also start information for starting a predetermined function or application program is associated with the combination of the predetermined area as set, and further the predetermined status as set, and that the predetermined area as set, the predetermined status as set and the start information are stored are appropriately combined together.

Yet still further, according to a seventeenth aspect of the present invention, there is provided a method of starting the function of an information processing unit wherein at least one of the predetermined functions to be started serves as a setting function which is made by executing the function starting method of the eleventh to thirteenth aspects.

Yet still further, according to an eighteenth aspect of the present invention, there is provided a method of starting the function of an information processing unit wherein at least one of the application program to be started serves as a setting function which is made by executing the function starting method of the fourteenth to sixteenth aspects.

Yet still further, in an interface unit of a coordinate reading system according to the present invention, a coordinate reading apparatus is connected to an information processing unit so that the function starting method according to the first to eighteenth aspects is executed.

Yet still further, in a tablet driver of a coordinate reading system according to the present invention, the tablet drive is built in the information processing unit, inputs information from the coordinate reading apparatus, and executes the function starting method of the first to eighteenth aspects.

Yet still further, in a coordinate reading system according to the present invention, the tablet driver is provided.

Embodiments of the present invention will now be described by way of further example only and with reference to the accompanying drawings; in which:

Fig. 1 is a block diagram showing a coordinate reading system according to a first embodiment of the present invention.

Fig. 2 is an explanatory diagram for a menu used the coordinate reading apparatus according to the first embodiment of the present invention.

Fig. 3 is an explanatory diagram showing the structure of menu data of a tablet driver in the coordinate reading system according to the first embodiment of the present invention.

Fig. 4 is a flowchart showing internal processing of the tablet driver in the coordinate reading system according to the first embodiment of the present invention.

Fig. 5 is an explanatory diagram showing a first setting screen of the tablet driver per se in a coordinate reading system according to a second embodiment of the present invention.

Fig. 6 is an explanatory diagram showing a second setting screen of the tablet driver per se in a coordinate reading system according to the second embodiment of the present invention.

Fig. 7 is a flowchart showing a first portion of a setting process of the tablet driver per se in the coordinate reading system according to the second embodiment of the present invention.

Fig. 8 is a flowchart showing a second portion of a setting process of the tablet driver per se in the coordinate reading system according to the second embodiment of the present invention.

Fig. 9 is an outside view showing a coordinate indicator having a plurality of switches in the coordinate reading system according to another embodiment of the present invention.

Fig. 10 is an explanatory diagram showing menus using the coordinate indicator having a plurality of switches in the coordinate reading system according to another embodiment of the present invention.

Fig. 11 is an explanatory diagram showing the structure of menu data of the tablet driver using the coordinate indicator having a plurality of switches in the coordinate reading system according to another embodiment of the present invention.

Fig. 12 is a flowchart showing internal processing of the tablet driver using the coordinate indicator having a plurality of switches in the coordinate reading system according to another embodiment of the present invention.

Fig. 13 is a flowchart showing internal processing of the tablet driver which allows a function to be started by only judging a coordinate value in the coordinate reading system according to another embodiment of the present invention.

Fig. 14 is a flowchart showing internal processing of the tablet driver which allows a function to be started by the switch status in the coordinate reading system according to another embodiment of the present invention.

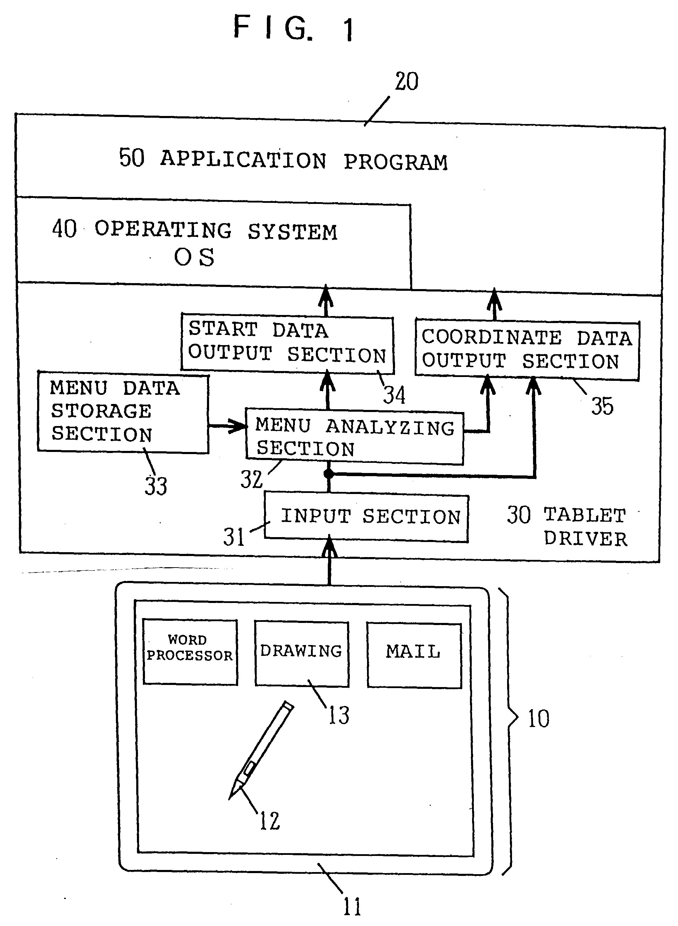

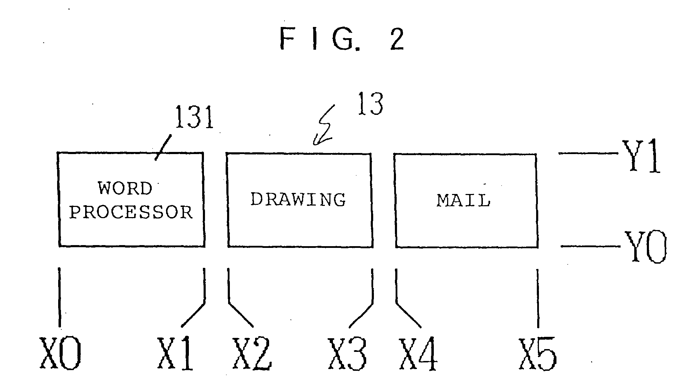

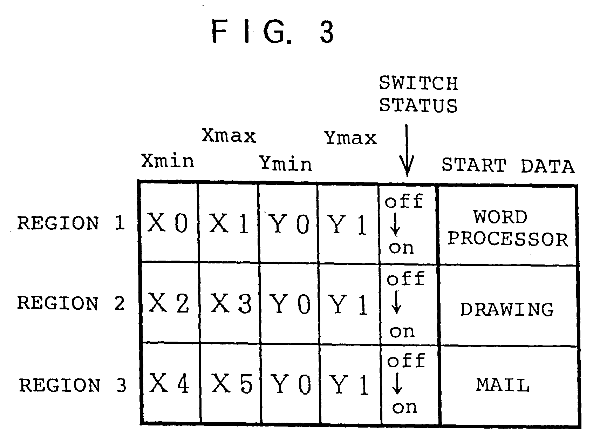

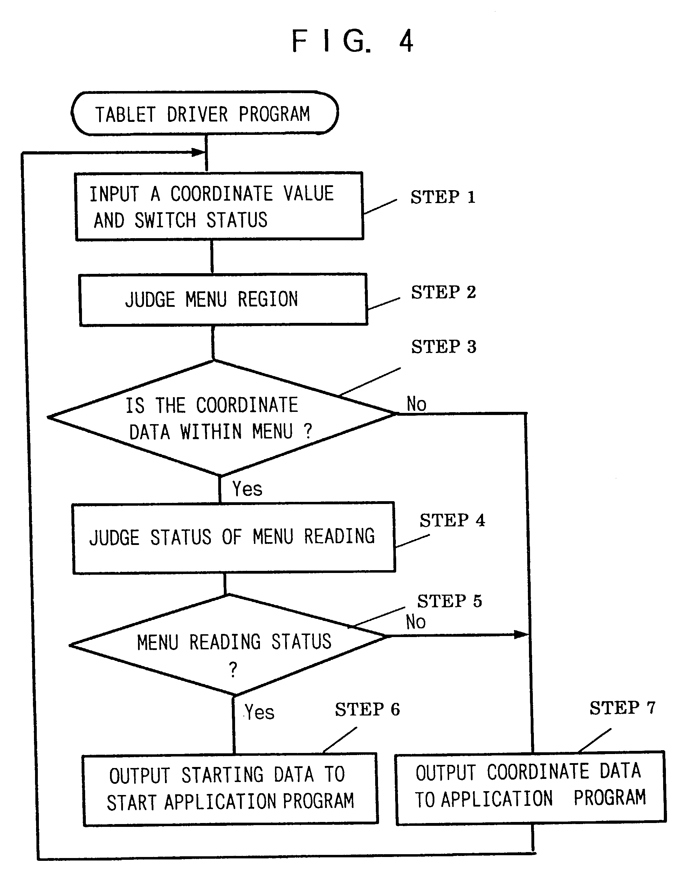

A description will be given of a method of starting the function of an information processing unit according to one embodiment of the present invention with reference to Figs. 1 to 4. Fig. 1 is a block diagram showing the structure of a coordinate reading system that executes a function starting method according to the present invention. Fig. 2 is an explanatory diagram for a menu provided in the coordinate reading apparatus. Fig. 3 is an explanatory diagram for menu data. Fig. 4 is a flowchart showing internal processing of tablet driver program.

First, referring to Fig. 1, the structure of the coordinate reading system will be described. A coordinate reading apparatus 10 is constructed of a tablet 11 and a coordinate indicator 12. The surface of the tablet 11 serves as a coordinate reading plane, which reads a point indicated by the coordinate indicator 12. In the general coordinate reading apparatus, the coordinate indicator is equipped with a switch so that a coordinate value is read by operating the switch, the coordinate value of the read point and the status of the switch are outputted to an external device through an interface. A processing circuit for detecting coordinates is equipped within the tablet 11. Since a variety of systems have been already proposed for the structure for detecting the coordinates, the description thereof will be omitted in the present specification. Since the present invention is not concerned with the operational principle of the coordinate reading apparatus, an appropriate system may be applied for realizing the present invention.

The coordinate reading plane of the tablet 11 displays a menu 13. The menu 13 is designed such that its region is indicated by a frame line, and a function which is assigned to the menu is indicated by characters or the like inside of the frame line. Since this mere indication does not function as the menu, as will be described later, when the region is indicated by the coordinate indicator 12, the coordinate value of an indicated position is compared with data representative of a menu region to recognize the region, thereby conducting a predetermined operation. This function is provided within a tablet driver 30 in the coordinate reading system according to this embodiment.

The coordinate reading apparatus 10 thus structured is connected to a computer 20 which is an information processing unit. The computer 20 installs a tablet driver 30, an operating system 40, an application program 50 as software therein. The computer 20 shown in Fig. 1 exhibits a relation of data or indication between each software. Since the relation between each software is generally complicated, it is difficult to explain its details. It should be understood that the following description is given of a schematic relation between the respective software, mainly the tablet driver.

The tablet driver 30 is constructed of an input section 31, a menu analyzing section 32, a menu data storage section 33, a start data output section 34, and a coordinate data output section 35. The input section 31 serves as an interface to the coordinate reading apparatus 10, and inputs a coordinate value and a switch status which are outputted from the coordinate reading apparatus 10. The menu analyzing section 32 is connected to the input section 31 and the menu data storage section 33, and judges each region of the menu 13 according to the inputted coordinate value and the switch status.

Menu data for analyzing the menu 13 is stored in the menu data storage section 33 in advance. The detailed positional relation of the menu 13 is shown in Fig. 2, and the structure of menu data is shown in Fig. 3. As shown in Fig. 2, the menu 13 defines the minimum value and the maximum value of the respective coordinate values in an X-direction and a Y-direction (the coordinate system in this example is an X-Y rectangular coordinate system where a rightward direction is a positive direction of the X-direction, and an upward direction is a positive direction of the Y-direction). For example, a square 131 in which "WORD PROCESSOR" is indicated in Fig. 2 defines the following values.

X0: a minimum coordinate value in the X-direction
X1: a maximum coordinate value in the X-direction
Y0: a minimum coordinate value in the Y-direction
Y1: a maximum coordinate value in the Y-direction

Other squares are defined in the same manner.

Menu data storage section 33 stores those menu data with the structure shown in Fig. 3. In a region 1, data of the above square 131 is stored. In this example, X0, X1, Y0 and Y1 denote the positional information of the square 131 as mentioned above. Information of "switch status" is directed to the switch status of the coordinate indicator which is allowed to correspond to reading of the square. The "off - on" means that the coordinate value of the square is detected when the switch status is changed from off to on. Reading the menu by the change of "off - on" is a very general reading method. As occasions demand, for example, the system can be designed to read the menu by merely indicating the square regardless of the switch status. In addition, the menu data storage section 22 also stores start data corresponding to the square. Therefore, data associated with the switch status is also stored. In the above square 131, the start data of "WORD PROCESSOR" is stored, and this data is used for starting the application program later.

The menu analyzing section 32 is also connected to the start data output section 34 and the coordinate data output section 35. Then, as mentioned above, the coordinate value and the switch status which are inputted from the input section 31 are compared with the menu data stored in the menu data storage section 33, to thereby judge whether the menu region is read, or not. If it is judged that the menu is read, the start data stored in the menu data storage section 33 is outputted to the start data output section 34. Also, if it is judged that a region other than the menu is read, this judgment is announced to the coordinate data output section 35.

The start data output section 34 has an interface to the operating system 40. Upon inputting the start data from the menu analyzing section 32, information relating to the application program to be started is outputted to the operating system 40 on the basis of the start data, to make the application program start.

The coordinate data output section 35 is connected to the input section 31, and has an interface to the application program 50. Upon receiving a notice that a region other than the menu region is read from the menu analyzing section 32, the coordinate value and the switch status are inputted from the input section 31, and converted into a standard format which is set as the tablet driver before being outputted to the application program 50. The function of converting the coordinate value and the switch status into a standard format to output them is an original role of the tablet driver. Even if the coordinate data inputted from the coordinate reading apparatus is described in a format inherent to the device, the coordinate data is outputted to the application program in the format set as the tablet driver. In recent years, as the standard format, "Wintab interface specification" which is a tablet driver for "Microsoft Windows" is widely used.

Then, a description will be given of the operation of the above tablet driver 30 with reference to a flowchart shown in Fig. 4.

First, in step 1, a coordinate value at a position indicated by the coordinate indicator 12 and a switch status are inputted.

Then, in step 2, it is judged whether the coordinate value is contained in the menu region, or not. As was already described, a coordinate value indicative of an area of the menu region is stored in the menu data storage section 33. In step 2, the menu data is compared with the inputted coordinate value, and it is judged whether it is within the menu, or not. For example, in the case where the coordinate value calculated in step 1 is (X,Y), if the following expressions are satisfied,

$$X0 < X < X1,$$

and

$$Y0 < Y < Y1$$

it is judged that the coordinate value is "WORD PROCESSOR" menu. Thus, on the basis of the result judged in step 2, processing is branched in step 3. If it is judged that the coordinate value is within the menu, processing is advanced to succeeding step 4, whereas if it is judged that the coordinate value is out of the menu, processing is branched to step 7.

In the case where the coordinate value is within the menu, it is judged in succeeding step 4 whether the switch status is a status set for reading the menu, or not. As described with reference to Fig. 3, it is judged that the switch status is changed from off to on in this situation. Since the switch status is inputted in time series together with the coordinate value, the status to be inputted is compared with the previously inputted status every time, thereby being capable of detecting a change of the switch status from off to on. On the basis of the result judged in step 4, processing is branched in step 5. If it is detected that the switch status is changed from off to on, processing is advanced to succeeding step 6, but if not, processing is branched to step 7.

If it is judged that the menu is read through the above processing, in succeeding step 6, the start data corresponding to the read menu is received from the menu data storage section 33, and on the basis of this start data, information relating to the application program to be started is outputted to the operating system 40. Thereafter, corresponding application program is started by the function of the operating system 40. Since the procedure for starting the application program is determined according to the operating system, control may comply with that procedure.

If it is judged that a region other than the menu region is read, in step 7, the coordinate data which has been converted into the standard format is outputted to the application program 50.

It should be noted that a sequential processing of steps 2, 3 and a sequential processing of steps 4, 5 may be replaced in order. Those 4 steps is processing for analyzing the menu, and judge whether both of the condition of the coordinate value and the condition of the switch status are satisfied, or not. Even if the steps 4 and 5 are executed earlier, and steps 2 and 3 are then executed, the same operation is obtained as a whole.

As described above, in the coordinate reading system that executes the function starting method according to the present invention, the menu on the tablet is read, to thereby start the application program on the basis of the stored start data. An operator can conduct the start of the application program and the operation of the application program per se by only the coordinate reading operation, thereby being capable of unifying the operation. Also, the present invention can further improve the ease to use the conventional coordinate reading system.

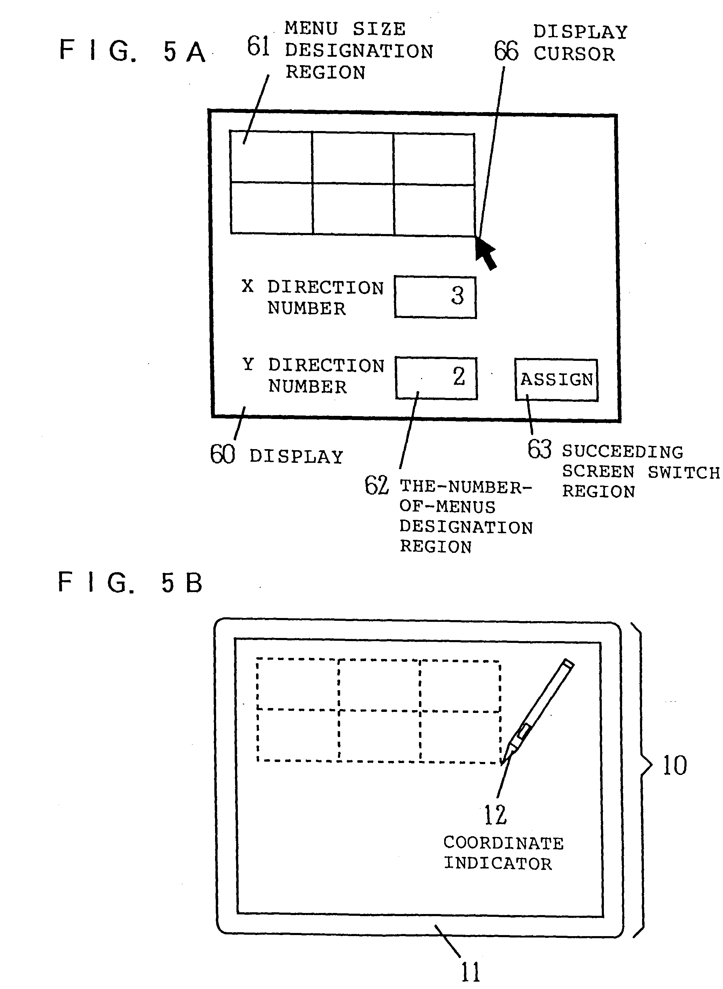

Subsequently, a method of starting the function of an information processing unit according to a second embodiment of the present invention will be described with reference to Figs. 5 to 8.

A menu 13 disposed in the tablet 11 is desirably adapted in such a manner that its position, application program to be started, etc., can be designed by the operator's operation. This is because application program in use is different depending on the respective operators. This embodiment is concerned with a coordinate reading system that employs a method of providing a function of designing an environment to be started in addition to the above method for starting the function.

As was described with reference to Fig. 3, information necessary for this method includes menu position information, switch status information and start information that describes a function to be started when inputting a menu. An object of this embodiment is to define those information by the operation of the coordinate reading apparatus. In the software which was described as the tablet driver, a part for this object is called "control panel" in this specification. Hereinafter, the operation of setting the menu information through the control panel will be described in order.

Fig. 5(a) is a menu position setting screen of the control panel. In this embodiment, a function assigned screen is provided as another screen of the control panel. However, this screen will be described later.

In the following description, a term "display menu" is used. This menu is different from a menu displayed on the tablet and directed to what is displayed on a display 60 which is connected to a computer. Upon indicating a topside of the tablet 11 shown in Fig. 5(b) by a coordinate indicator 12, a coordinate value at a point indicated by the coordinate indicator 12 is read and then inputted to a tablet driver within the computer. The tablet driver controls a display cursor 66 by the inputted coordinate value. The display menu performs a predetermined function indicated by the display cursor 66. Therefore, it is regarded that a basic operation is not changed from the menu displayed on the tablet.

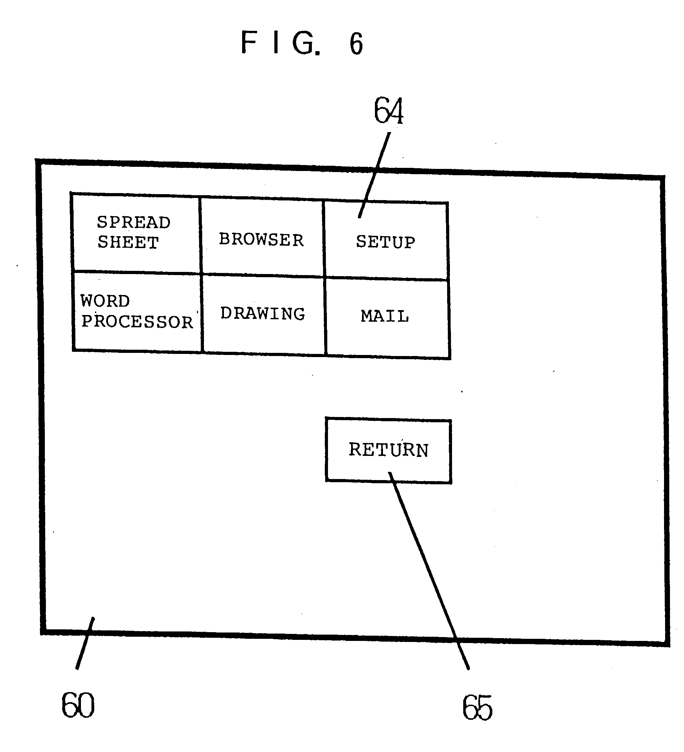

First, the display menu on the menu position setting screen, as shown in the figure, consists of a menu size designation region 61, a the-number-of-menus designation region 62, and a succeeding screen switch region 63. Of those, the succeeding screen switch region 63 indicates a menu for switching the current screen to a succeeding function assigned screen. The function assigned screen is displayed as shown in Fig. 6. This display menu includes a start data assigned region 64 and a previous screen switch region 65 for switching the current screen to the menu position setting screen.

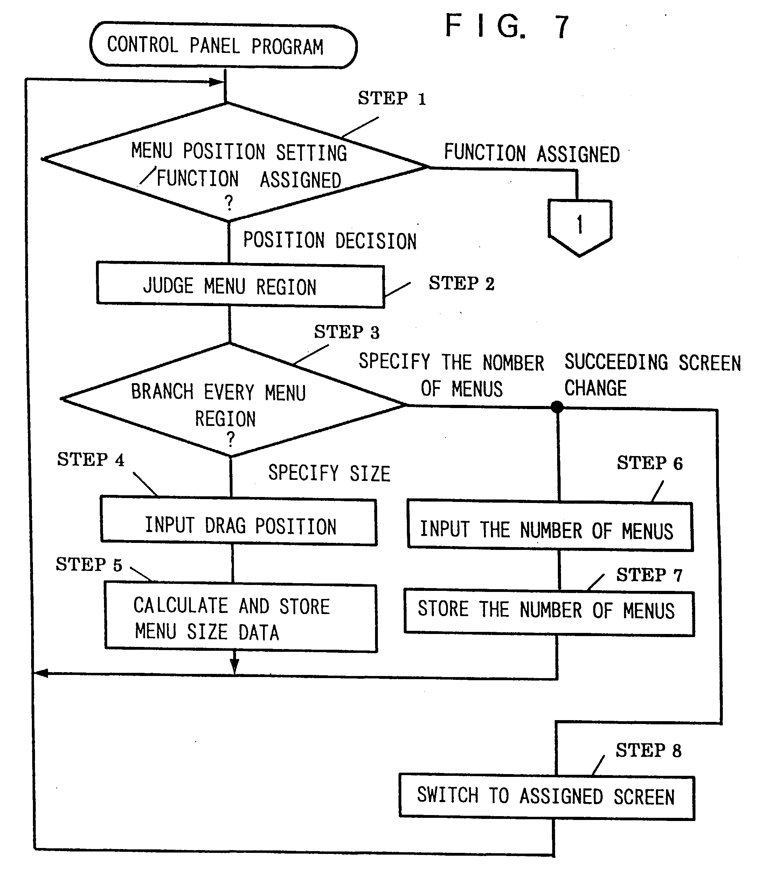

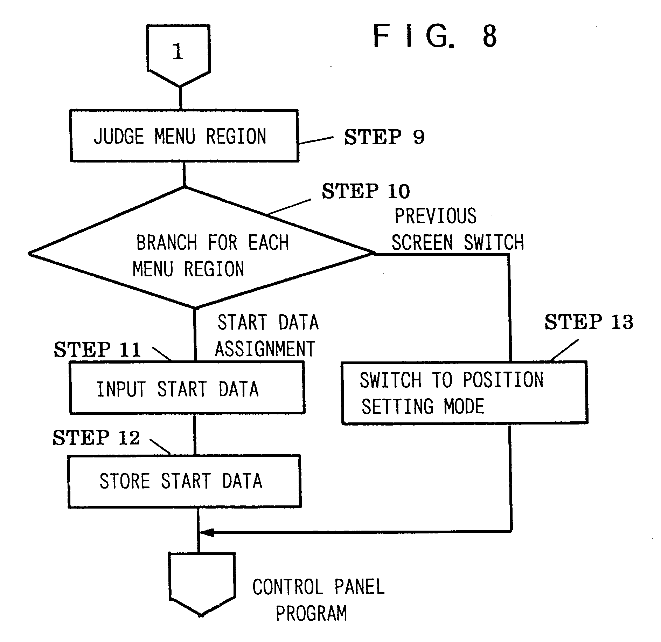

Upon inputting necessary information from those display menus, the control panel sets various data of the tablet driver. Figs. 7 and 8 are flowcharts showing a control panel processing program. The operation will be described in accordance with steps in the figures.

First, in step 1, referring to an internal flag, processing is branched depending on whether the current screen is the menu position setting screen or the function assigned screen. Since the flag is set such that the screen becomes the menu position setting screen immediately after the control panel is started, processing is first branched to step 2 through this process.

In step 2, the input judgment of the respective display menus on the menu position setting screen shown in Fig. 5 is conducted. It can be regarded that an input judging process is the same as the judgment of the menus on the tablet. In other words, when cursor coordinates on the display are within any display menu region, and the switch status inputted from the coordinate reading apparatus is changed from off to on, it is recognized that the menu is inputted. According to the display menu discriminated in this process, in step 3, processing is branched to a processing routine for each display menu.

If it is recognized that the menu size designation region 61 has been inputted, the menu size information is inputted in step 4. In more detail, the following operation is conducted. The coordinate indicator 12 is operated on the tablet 11 in such a manner that the display cursor 66 is moved to a right and lower corner of the menu size designation region 61, and in this state, a switch of the coordinate indicator 12 is depressed. Through this operation, the display cursor 66 comes to a state where it "grasps" the right and lower corner of the menu size designation region 61. If the coordinate indicator 12 is moved while the switch of the coordinate indicator 12 is being depressed, the display cursor 66 pulls the menu size designation region 61 while grasping the right and lower corner. This operation is called "drag". Due to the drag, the menu size designation region 61 can be freely changed in size. The state of the drag is released by releasing the switch of the coordinate indicator 12. With the release of the drag, the expanded or contracted menu size designation region 61 is decided. In this way, the size of the menu is set in step 4. Also, since the drag can operate on four corners and sides of the menu region, the position of the menu can be moved.

In this way, after the position and size of the entire menu are set in step 4, the respective squares of the menu are obtained using data indicative of the number of squares in the X-direction and Y-direction which have been already set at present, respectively. In other words, X0, X1, ... Y0, Y1, etc., as shown in Fig. 2 are obtained. In order to obtain the size and the position of the squares, if the squares are partitioned by boundaries as shown in Fig. 5, the entire size is merely divided by the number of squares, and if there are boundaries having a width as in the menu shown in Fig. 2, a constant of the width is stored, and arithmetic operation is conducted taking the constant into consideration. Finally, the menu size information thus obtained is stored in the menu data storage section 33, to thereby complete processing of deciding the menu position information.

If it is judged that the-number-of-menus designation region 62 has been inputted in step 2, processing is branched to step 6 in step 3. In step 6, the number of menus which is registered in the menu region is inputted. The numeral value is directly inputted from the key board to input the number of menus. Alternatively, a display menu for setting numeral value is provided on the display 60 so that the number of menus is inputted from this menu, or inputted by operating a slide bar, etc. The number of menus as set in this process is stored as internal information in step 7, and reflected when arithmetically operating the menu position information as described above. With the above control, a process of setting the number of menus is completed.

If it is judged in step 2 that the succeeding screen switch region 63 has been inputted, processing is branched to step 8 in step 3. In step 8, the internal flag is set to an assigned screen. The flag set in this process is judged in step 1 for a succeeding process, and the processing is branched to a function assigned process.

A flowchart for processing of function assignment is shown in Fig. 8. After processing is branched in step 1, an input of the respective display menus on the start data assigned screen shown in Fig. 6 is judged in step 9. Then, according to the display menu discriminated in this process, processing is branched to a processing routine for each display menu in step 10.

If it is recognized that the start data assigned region 64 has been inputted, the start data is inputted in step 11. In this situation, since the start data assigned region 64 is divided into plural regions as many as the number corresponding to the menus to be set, the start data is inputted after the respective square region is judged as in the menu judging process in step 9. Alternatively, a process of judging the respective squares may be also conducted in step 9. The start data is directly inputted from the key board for inputting the start data, or a list of the applications to be started is displayed by the file name display function of the operating system so that an application is selected from the list as displayed. In this way, the start data as inputted is stored in the menu data storage region 33 in step 12.

In step 9, if it is judged that the previous screen switch region 65 for returning the current screen to the menu position setting screen has been inputted, processing is branched to step 13 in step 10. In step 13, the internal flag is set to the position setting screen. The flag set in this process is judged in step 1 for a succeeding process, and the processing is branched to the position setting process.

In the above processing, the position setting process and the function assigned process are switchingly displayed on different display screens, but this has a specific meaning. The display screen may be designed in such a manner that all of setting can be conducted on one screen, and how to operate depends on a design item.

As described above, with addition of the above process, the position of the menu for starting and the function to be started can be freely designed by the operator, and also the coordinate reading system easy to use can be realized.

Further, as a function to be started, the control panel per se is set so that the control panel may be started by the start function of the tablet driver. With this structure, the operability is further improved.

The above description was given of the tablet driver and the coordinate reading system using the tablet driver together with the function starting method according to the present invention, Those structures can be implemented with variation. Hereinafter, various embodiments will be described.

In the above coordinate reading system, the menu on the tablet is read by the operation of the switch disposed on the coordinate indicator, and a predetermined function is started. Referring to this description, the number of switches disposed on the coordinate indicator is not particularly described. The coordinate reading system structured as described above may be structured in such a manner that a plurality of switches are provided on the coordinate indicator, a menu is read by the operation of the plural switches, and even if the same menu is read, a function to be started is changed for each switch status.

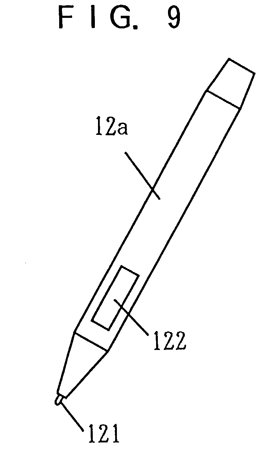

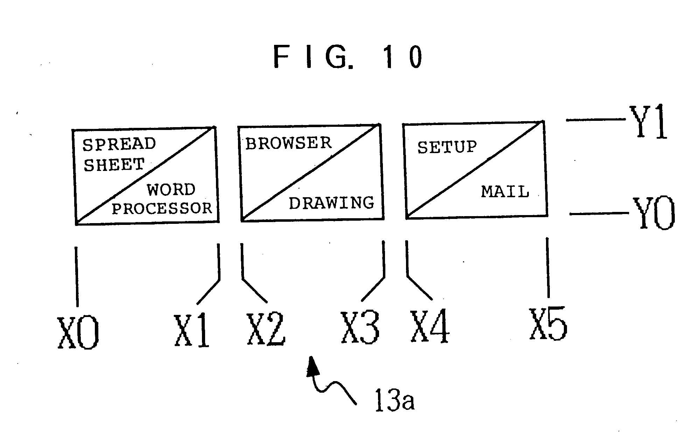

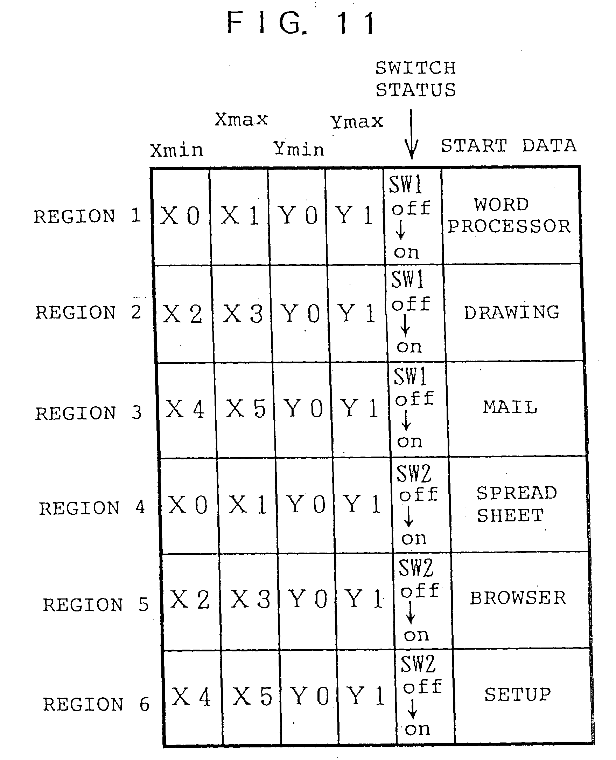

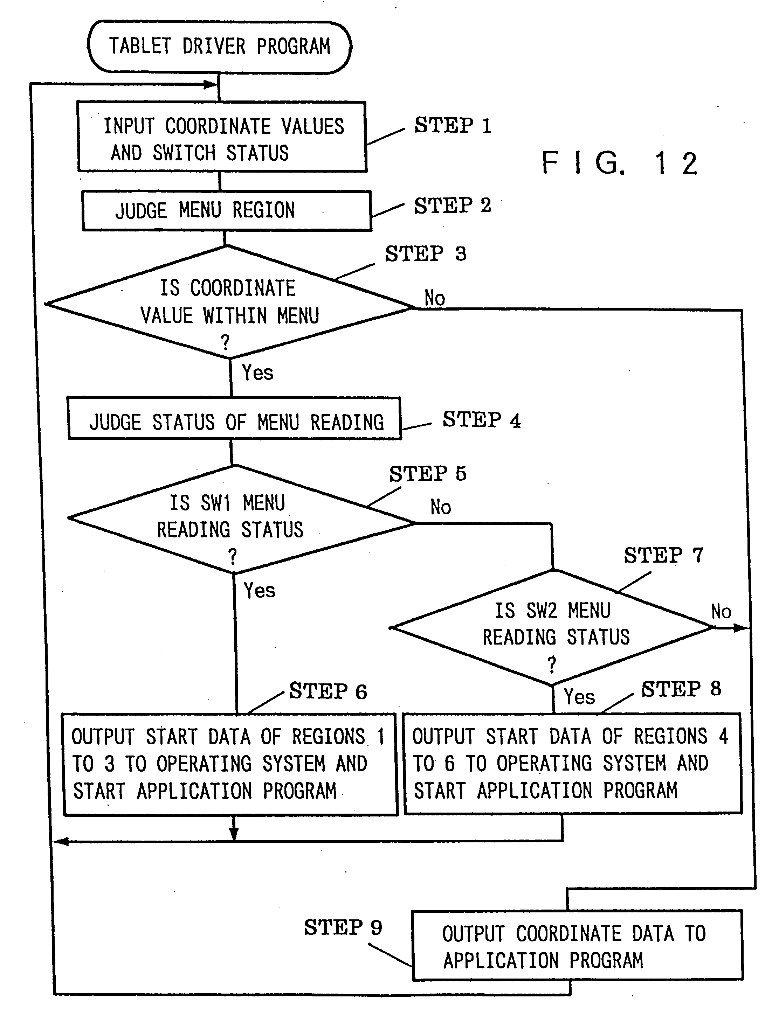

Fig. 9 is an outside view showing a coordinate indicator used in the coordinate reading system structured as described above. Fig. 10 is an explanatory diagram of menus provided in the coordinate reading apparatus. Fig. 11 is an explanatory diagram of menu data. Fig. 12 is a flowchart showing an internal processing of tablet driver program.

There are a variety of coordinate indicators, for example, what is shown in Fig. 9 is shaped into a pen which is called "stylus pen". This pen is provided with a lead 121 at a top thereof in the same manner as the normal writing materials. The pen is also provided with a switch that operates in cooperation with the lead 121 inside of a pen shaft. This switch is called "pen switch". The pen switch is turned on when the lead 121 is pushed on the tablet but turned off when it is separated therefrom. Further, a side switch 122 is provided on the pen shaft. This switch is turned on/off with being depressed by a finger. Those two switches are detected by the tablet and used to read the menu.

In menus shown in Fig. 10, two functions are displayed within one square. Although its details will be described later, an object of this embodiment is that when those menus are read by the pen switch, functions at the right and lower row, that is, "WORD PROCESSOR", "DRAWING" and "MAIL" are started, whereas when the menus are read by the side switch, functions at the left and upper row, that is, "SPREAD SHEET", "BROWSER" and "SETUP" are started

The structure of menu data corresponding to those menus is designed as shown in Fig. 11. What are different from the foregoing embodiment are that regions 4 to 6 are newly added, and that the type of switches is added to data of the switch status. As is apparent from the figure, the position information of regions 4 to 6, that is, X0 to X5, Y0 and Y1 are identical with the position information of regions 1 to 3. "SW1" described in the switch status means the pen switch, and "SW2" means the side switch. Even if the regions 1 and 4 are physically situated at the same position, if these regions are read by SW1, that is, the pen switch, "WORD PROCESSOR" is started, whereas if they are read by SW2, that is, the side switch, "SPREAD SHEET" is started.

A flowchart for the above processing is shown in Fig. 12. What are different from the foregoing embodiment are that the type of the switch is taken into account in judgment of the menus in steps 5 and 7, and that start data is applied for each type of the switch in steps 6 and 8. After the position of the menu is judged in the processing of steps 1 to 3, the switch status is judged in step 4. At this time, the type of the switch is also discriminated. Then, in step 5, processing is branched depending on whether SW1 is in the menu reading status, or not, and if so, application program as set is started on the basis of the start data of the regions 1 to 3. If the switch is not SW1 in step 5, processing is branched depending on whether SW2 is in the menu reading status, or not, in step 7, but if so, application program as set is started on the basis of the start data of the regions 4 to 6. If it is judged that any switches are not in the menu reading status, or if it is judged that the position is not within the menu, coordinate data is outputted in step 9 as in the foregoing embodiment.

As described above, with addition of the type of the switch to the menu reading conditions, the definition of the menu can be graduated to the definition of position and the definition of the switch status. In this case, double menus can be defined even in the same menu region in comparison with the foregoing embodiment. As a result, it is effective when the reading plane of the tablet is narrowed such that a region where the menus are displayed is restricted.

Further, the coordinate indicator is provided with a so-called "cursor" in addition to the stylus pen. The normal cursor of this type has 4 switches, and the specific cursor has about 12 to 16 switches. If the above-mentioned coordinate reading system is structured by the coordinate reading apparatus using the cursor of this type, more menus can be defined.

As a specific menu reading method, the reading judgment may be conducted by only coordinate values without depending on the switch status. In the case where there is applied a coordinate reading apparatus with a principle that does not rely on contact such as electromagnetic induction or electrostatic induction as the reading principle, even if the tablet and the coordinate indicator are apart from each other by about several millimeters, coordinate values can be generally detected. Therefore, the coordinate reading apparatus can be designed in such a manner that with the coordinate indicator being merely put on the menu, the menu is recognized, and application program is started.

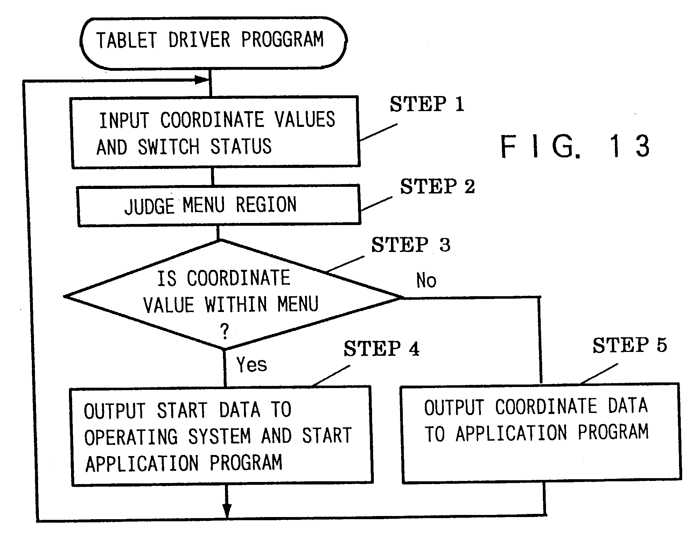

A flowchart for internal processing of tablet driver program which realizes the above structure is shown in Fig. 13. This flowchart omits steps 4 and 5 from the flowchart of the embodiment shown in Fig. 4, and permits each application program to be started by only judgment of the menu regions in steps 2 and 3 (steps 4 and 5).

Also, utilizing such an advantage that coordinate values can be detected even if the tablet and the coordinate indicator are apart from each other, the coordinate reading apparatus can be designed in such a manner that application program is started by only the switch status without using the menus. If the coordinate indicator is put on the tablet, the coordinate values as well as the switch status can be detected even in the case where the tablet and the coordinate indicator are apart from each other. Using the coordinate indicator having a plurality of switches, application program can be associated with each type of the switches.

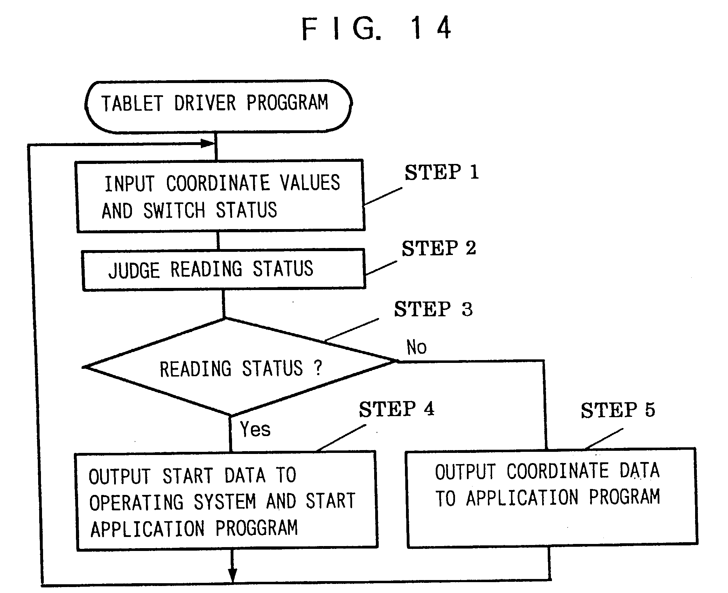

A flowchart for internal processing of tablet driver program which realizes the above structure is shown in Fig. 14. This flowchart omits steps 2 and 3 from the flowchart of the embodiment shown in Fig. 4, and permits each application program to be started by only judgment of the status in steps 4 and 5 (steps 4 and 5) . Although its detailed description is omitted, in step 4, corresponding application program is allowed to start for each type of the switches.

The above description was given of the respective embodiments of a method of starting program built in a computer by operating the coordinate reading apparatus, a tablet driver that realizes that method, and a coordinate reading system having the tablet driver and the application program built in the computer.

The above-mentioned embodiments are realized as the tablet driver, however, it is apparent that this maybe modified into hardware as an interface unit which is connected between the coordinate reading apparatus and the computer. For example, the interface is designed to emulate the key board, and application program is decided which starts on the basis of the coordinate values and the switch status which are inputted from the tablet so that the application program is started as a keyboard command.

Also, as a function to be started, it is apparent that not only the application program but also a variety of functions provided in the computer may be performed. For example, a sound function of the computer is effected so that a buzzer is rung, or a message is displayed on a display in response to an input from the tablet.

As was described above, in the method of starting the function of the information processing unit according to the present invention, in the coordinate reading system in which the coordinate reading apparatus having the coordinate indicator and the information processing unit are connected to each other, a coordinate value within a predetermined area of the tablet, the switch status of the coordinate indicator, or the combination thereof is discriminated, and on the basis of the discriminated result, a predetermined function such as application program within the information processing unit is executed.

Also, the above method is realized as a tablet driver, and the coordinate reading system including the tablet driver is structured. Further, the interface unit that employs the above method and connects the coordinate reading apparatus and the information processing unit is realized.

According to the coordinate reading system thus structured, menus provided in the tablet is read by the coordinate indicator, or the switch provided in the coordinate indicator is operated, thereby being capable of starting a function such as application program within the information processing unit. Without requiring operation such that an input is made through a keyboard or icon indicated on a display is inputted, one continuous operating environment from the start of the application until the subsequent operation can be structured by only the operation of the tablet.

**Claims**

1. A method of starting the function of an information processing unit in a coordinate reading system in which a coordinate reading apparatus constructed of a coordinate indicator and a tablet is connected to the information processing unit, and a predetermined function is executed in the information processing unit on the basis of information transmitted from the coordinate reading apparatus to the information processing unit, characterised by comprising:

identifying a coordinate value within a predetermined area of the tablet; and
starting said predetermined function when the coordinate value with the predetermined area is discriminated.

2. A method of starting the function of an information processing unit in a coordinate reading system in which a coordinate reading apparatus constructed of a coordinate indicator having a switch and a tablet is connected to the information processing unit, and a predetermined function is executed in the information unit on the basis of information transmitted from the coordinate reading apparatus to the information processing unit, characterised by comprising:

identifying that the status of the switch becomes a predetermined status; and
starting said predetermined function when the predetermined status is discriminated.

3. A method of starting the function of an information processing unit in a coordinate reading system in which a coordinate reading apparatus constructed of a coordinate indicator having a plurality of switches and a tablet is connected to the information processing unit, and a predetermined function is executed in the information processing unit on the basis of information transmitted from the coordinate reading apparatus to the information processing unit, characterised by comprising:

identifying that the status of the plurality of switches becomes a predetermined status; and
staring said predetermined function every predetermined status when the predetermined status is discriminated.

4. A method of starting the function of an information processing unit in a coordinate reading system in which a coordinate reading apparatus constructed of a coordinate indicator having a switch and a tablet is connected to the information processing unit, and a predetermined function is executed in the information processing unit on the basis of information transmitted from the coordinate reading apparatus to the information processing unit, characterised by comprising:

identifying a coordinate value within a predetermined area of the tablet;
identifying that the status of the switch becomes a predetermined status; and
starting said predetermined function when the coordinate value within the predetermined area and the predetermined status are discriminated.

5. A method of starting the function of an information processing unit in a coordinate reading system in which a coordinate reading apparatus constructed of a coordinate indicator having a plurality of switches and a tablet is connected to the information processing unit, and a predetermined function is executed in the information processing unit on the basis of information transmitted from the coordinate reading apparatus to the information processing unit, characterised by comprising:

identifying a coordinate value within a predetermined area of the tablet;
identifying that the status of the plurality of switches become a predetermined status; and
starting said predetermined function when the coordinate value within the predetermined area and the predetermined status are discriminated.

6. A method of starting the function of an information processing unit in a coordinate reading system in which a coordinate reading apparatus constructed of a coordinate indicator and a tablet is connected of a coordinate indicator and a tablet is connected to the information processing unit in which application program is installed, and said application program is executed in the information processing unit on the basis of information transmitted from the coordinate reading apparatus to the information processing unit, characterised by comprising:

identifying a coordinate value within a predetermined area of the tablet; and
staring said application program when the coordinate value within the predetermined area is discriminated.

7. A method of starting the function of an information processing unit in a coordinate reading system in which a coordinate reading apparatus constructed of a coordinate indicator having a switch and a tablet is connected to the information processing unit in which application program is installed, and said application program is executed in the information processing unit on the basis of information transmitted from the coordinate reading apparatus to the information processing unit, characterised by comprising:

identifying that the status of the switch becomes a predetermined status; and
staring said application program when the predetermined status is discriminated.

8. A method of starting the function of an information processing unit in a coordinate reading system in which a coordinate reading apparatus constructed of a coordinate indicator having a plurality of switches and a tablet is connected to the information processing unit in which application program is installed, and said application program is executed in the information processing unit on the basis of information transmitted from the coordinate reading apparatus to the information processing unit, characterised by comprising:

identifying that the status of the plurality of switches becomes a predetermined status; and
starting said application program every predetermined status when the predetermined status is discriminated.

9. A method of starting the function of an information processing unit in a coordinate reading system in which a coordinate reading apparatus constructed of a coordinate indicator having a switch and a tablet is connected to the information processing unit in which application program is installed, and said application program is executed in the information processing unit on the basis of information transmitted from the coordinate reading apparatus to the information processing unit, characterised by comprising:

identifying value with a predetermined area of a the tablet;
identifying that the status of the switch becomes a predetermined status; and
starting said application program when the coordinate value within the predetermined area and the predetermined status are discriminated.

10. A method of starting the function of an information processing unit in a coordinate reading system in which a coordinate reading apparatus constructed of a coordinate indicator having a plurality of switches and a tablet is connected to the information processing unit in which application program is installed, and said application program is executed in the information processing unit in which application program is installed, and said application program is executed in the information processing unit on the basis of information transmitted from the coordinate reading apparatus to the information processing unit, characterised by comprising:

identifying a coordinate value within a predetermined area of the tablet;
identifying that the status of the plurality of switches become a predetermined status; and
starting said application program when the coordinate value within the predetermined area and the predetermined status are discriminated.

**11.** A method of starting the function of an information processing unit in a coordinate reading system as claimed in claim 1, 4 or 5, said coordinate reading system further comprising:

setting said predetermined area;
associating start information for starting said predetermined function with said predetermined area as set; and
storing said predetermined area as set and said start information as set.

**12.** A method of starting the function of an information processing unit in a coordinate reading system as claimed in claims 2 to 5, said coordinate reading system further comprising:

setting said predetermined status;
associating start information for starting said predetermined status as set and said start information as set.

**13.** A method of starting the function of an information processing unit in a coordinate reading system as claimed in claim 4 or 5, said coordinate reading system further comprising:

setting said predetermined area;
setting said predetermined status;
associating start information for starting said predetermined function with the combination of said predetermined area as set and said predetermined status as set; and
storing said predetermined area as set, said predetermined status as set and said start information as set.

**14.** A method of starting the function of an information processing unit in a coordinate reading system as claimed in claim 6, 9 or 10, said coordinate reading system further comprising:

setting said predetermined area;
associating start information for starting said application program with said predetermined area as set; and
storing said predetermined area as set and said start information as set.

**15.** A method of starting the function of an information processing unit in a coordinate reading system as claimed in claims 7 to 10, said coordinate reading system further comprising:

setting said predetermined status;
associating start information for starting said application program with said predetermined status as set; and
storing said predetermined status as set and said start information as set.

**16.** A method of starting the function of an information processing unit in a coordinate reading system as claimed in claim 9 or 10, said coordinate reading system further comprising:

setting said predetermined area;
setting said predetermined status;
associating start information for starting said application program with the combination of said predetermined area as set and said predetermined status as set; and
storing said predetermined area as set, said predetermined status as set and said start information as set.

**17.** A method of starting the function of an information processing unit, characterised in that at least one of the predetermined functions to be started serves as a setting function which is made by executing the function starting method as claimed in any one of claims 11 to 13.

**18.** A method of starting the function of an information processing unit, characterised in that at least one of the application program to be started serves as a setting function which is made by executing the function starting method as claimed in any one of claims 14 to 16.

**19.** An interface unit for a coordinate reading system, characterised in that said coordinate reading apparatus is connected to said information processing unit so that the function starting method as claimed in claims 1 to 18 is executed.

**20.** A tablet driver of a coordinate reading system, characterised in that the tablet drive is built in the information processing unit, information from the coordinate reading apparatus is inputted, and the function starting method as claimed in claims 1 to 19 is executed.

**21.** A coordinate reading system, characterised by comprising said tablet driver as claimed in claim 20.

# F I G. 1

20

50 APPLICATION PROGRAM

40 OPERATING SYSTEM
O S

START DATA
OUTPUT SECTION

COORDINATE DATA
OUTPUT SECTION

34

35

MENU DATA
STORAGE
SECTION

MENU ANALYZING
SECTION

33

32

INPUT SECTION

30 TABLET
DRIVER

31

| WORD PROCESSOR | DRAWING | MAIL |

13

10

12

11

# F I G. 2

# F I G. 3

| | Xmin | Xmax | Ymin | Ymax | SWITCH STATUS | START DATA |
|---|---|---|---|---|---|---|
| REGION 1 | X 0 | X 1 | Y 0 | Y 1 | off ↓ on | WORD PROCESSOR |
| REGION 2 | X 2 | X 3 | Y 0 | Y 1 | off ↓ on | DRAWING |
| REGION 3 | X 4 | X 5 | Y 0 | Y 1 | off ↓ on | MAIL |

EP 0 853 271 A1

# F I G. 4

TABLET DRIVER PROGRAM

INPUT A COORDINATE VALUE AND SWITCH STATUS — STEP 1

JUDGE MENU REGION — STEP 2

STEP 3

IS THE COORDINATE DATA WITHIN MENU ? — No

Yes

JUDGE STATUS OF MENU READING — STEP 4

STEP 5

MENU READING STATUS ? — No

Yes STEP 6

STEP 7

OUTPUT STARTING DATA TO START APPLICATION PROGRAM

OUTPUT COORDINATE DATA TO APPLICATION PROGRAM

15

FIG. 5A

61 MENU SIZE DESIGNATION REGION

66 DISPLAY CURSOR

X DIRECTION NUMBER    3

Y DIRECTION NUMBER    2    ASSIGN

60 DISPLAY

62 THE-NUMBER-OF-MENUS DESIGNATION REGION

63 SUCCEEDING SCREEN SWITCH REGION

FIG. 5B

12 COORDINATE INDICATOR

10

11

# F I G. 6

# F I G. 7

CONTROL PANEL PROGRAM

STEP 1

MENU POSITION SETTING / FUNCTION ASSIGNED ?

FUNCTION ASSIGNED

1

POSITION DECISION

JUDGE MENU REGION — STEP 2

STEP 3

SPECIFY THE NOMBER OF MENUS    SUCCEEDING SCREEN CHANGE

BRANCH EVERY MENU REGION ?

STEP 4    SPECIFY SIZE

INPUT DRAG POSITION

STEP 6

INPUT THE NUMBER OF MENUS

STEP 5

CALCULATE AND STORE MENU SIZE DATA

STEP 7

STORE THE NUMBER OF MENUS

STEP 8

SWITCH TO ASSIGNED SCREEN

F I G. 8

1

JUDGE MENU REGION — **STEP 9**

**STEP 10**

BRANCH FOR EACH
MENU REGION

PREVIOUS
SCREEN SWITCH

START DATA
ASSIGNMENT

**STEP 11**

INPUT START DATA

**STEP 13**

SWITCH TO POSITION
SETTING MODE

**STEP 12**

STORE START DATA

CONTROL PANEL
PROGRAM

# F I G. 9

# F I G. 1 0

# F I G. 11

| | Xmin | Xmax | Ymin | Ymax | SWITCH STATUS | START DATA |
|---|---|---|---|---|---|---|
| REGION 1 | X 0 | X 1 | Y 0 | Y 1 | SW1 off ↓ on | WORD PROCESSOR |
| REGION 2 | X 2 | X 3 | Y 0 | Y 1 | SW1 off ↓ on | DRAWING |
| REGION 3 | X 4 | X 5 | Y 0 | Y 1 | SW1 off ↓ on | MAIL |
| REGION 4 | X 0 | X 1 | Y 0 | Y 1 | SW2 off ↓ on | SPREAD SHEET |
| REGION 5 | X 2 | X 3 | Y 0 | Y 1 | SW2 off ↓ on | BROWSER |
| REGION 6 | X 4 | X 5 | Y 0 | Y 1 | SW2 off ↓ on | SETUP |

TABLET DRIVER PROGRAM

INPUT COORDINATE VALUES AND SWITCH STATUS —— STEP 1

JUDGE MENU REGION —— STEP 2

STEP 3

IS COORDINATE VALUE WITHIN MENU ? —— No

F I G. 1 2

Yes

JUDGE STATUS OF MENU READING —— STEP 4

STEP 5

IS SW1 MENU READING STATUS ? —— No

Yes

STEP 7

IS SW2 MENU READING STATUS ? —— No

Yes —— STEP 8

STEP 6

OUTPUT START DATA OF REGIONS 1 TO 3 TO OPERATING SYSTEM AND START APPLICATION PROGRAM

OUTPUT START DATA OF REGIONS 4 TO 6 TO OPERATING SYSTEM AND START APPLICATION PROGRAM

STEP 9

OUTPUT COORDINATE DATA TO APPLICATION PROGRAM

23

```
          ┌──────────────────────────────┐
          │   TABLET DRIVER PROGGRAM      │
          └──────────────────────────────┘
                         │
      ┌──────────────────┼───────────────────────┐
      │       ┌──────────────────────────┐  STEP 1
      │       │ INPUT COORDINATE VALUES  │
      │       │ AND SWITCH STATUS        │        F I G.  1 3
      │       └──────────────────────────┘
      │                  │              STEP 2
      │       ┌──────────────────────────┐
      │       │ JUDGE MENU REGION        │
      │       └──────────────────────────┘
      │                  │         STEP 3
      │              ╱────────────────╲
      │             ╱  IS COORDINATE   ╲      No
      │            ⟨ VALUE WITHIN MENU  ⟩─────────────┐
      │             ╲        ?         ╱              │
      │              ╲────────────────╱               │
      │                  │ Yes   STEP 4         STEP 5 │
      │       ┌──────────────────────┐  ┌──────────────────────┐
      │       │ OUTPUT START DATA TO │  │ OUTPUT COORDINATE DATA│
      │       │ OPERATING SYSTEM AND │  │ TO APPLICATION PROGRAM│
      │       │ START APPLICATION    │  │                       │
      │       │ PROGRAM              │  └──────────────────────┘
      │       └──────────────────────┘              │
      │                  │                          │
      └──────────────────┴──────────────────────────┘
```

24

# F I G. 1 4

```
        ╭─────────────────────────────╮
        │   TABLET DRIVER PROGGRAM    │
        ╰─────────────────────────────╯
                      │
    ┌─────────────────────────────────┐   STEP 1
    │  INPUT COORDINATE VALUES        │
    │  AND SWITCH STATUS              │
    └─────────────────────────────────┘
                      │
    ┌─────────────────────────────────┐   STEP 2
    │  JUDGE READING STATUS           │
    └─────────────────────────────────┘
                      │
                                          STEP 3
              ◇─────────────────◇
             ╱                   ╲        No
            ◇   READING STATUS ?   ◇──────────────
             ╲                   ╱
              ◇─────────────────◇
                      │            STEP 4                      STEP 5
                     Yes
    ┌─────────────────────────────────┐   ┌─────────────────────────────────┐
    │  OUTPUT START DATA TO           │   │  OUTPUT COORDINATE DATA         │
    │  OPERATING SYSTEM AND START     │   │  TO APPLICATION PROGRAM         │
    │  APPLICATION PROGGRAM           │   │                                 │
    └─────────────────────────────────┘   └─────────────────────────────────┘
                      │
                      ▼
```

European Patent Office

**EUROPEAN SEARCH REPORT**

Application Number

EP 98 30 0244

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 276 795 A (HOEBER ANTHONY ET AL) <br> * abstract * <br> * column 5, line 5 - line 8 * <br> * column 6, line 29 - line 32 * <br> * column 10, line 12 - line 50 * <br> --- | 1-21 | G06F3/033 <br> G06F3/023 |
| X | MILLEN D R: "PEN-BASED USER INTERFACES" <br> AT & T TECHNICAL JOURNAL, <br> vol. 72, no. 3, 1 May 1993, <br> pages 21-27, XP000456944 <br> * figure 3A * <br> --- | 1,6 | |
| A | "NEW ELEMENTS FOR A GRAPHICAL USER INTERFACE" <br> IBM TECHNICAL DISCLOSURE BULLETIN, <br> vol. 38, no. 5, 1 May 1995, <br> pages 395-397, XP000519622 <br> * the whole document * <br> --- | 1-21 | |
| A | EP 0 487 219 A (SMITHS INDUSTRIES PLC) <br> * abstract * <br> * column 4, line 9 - line 48; figure 3 * <br> --- | 1-21 | TECHNICAL FIELDS SEARCHED (Int.Cl.6) <br><br> G06F |
| A | US 5 345 550 A (BLOOMFIELD MARC A) <br> * column 4, line 35 - column 58 * <br> ----- | 11-18 | |

The present search report has been drawn up for all claims

| Place of search | Date of completion of the search | Examiner |
|---|---|---|
| THE HAGUE | 20 April 1998 | Ciarelli, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)